(19)

Europäisches
Patentamt
European
Patent Office
Office européen
des brevets

(11)　**EP 2 565 168 A1**

(12)　　　　　　　　**EUROPEAN PATENT APPLICATION**

(43) Date of publication:
　　**06.03.2013　Bulletin 2013/10**

(21) Application number: **12182431.2**

(22) Date of filing: **30.08.2012**

(51) Int Cl.:
　　*C03B 27/004* (2006.01)　　　*C03B 27/02* (2006.01)
　　*C03B 27/044* (2006.01)　　*C03B 29/08* (2006.01)
　　*C03B 35/18* (2006.01)　　　*C03B 35/24* (2006.01)
　　*C03C 23/00* (2006.01)　　　*H05B 6/80* (2006.01)

(84) Designated Contracting States:
　　**AL AT BE BG CH CY CZ DE DK EE ES FI FR GB
　　GR HR HU IE IS IT LI LT LU LV MC MK MT NL NO
　　PL PT RO RS SE SI SK SM TR**
　　Designated Extension States:
　　**BA ME**

(30) Priority: **31.08.2011　KR 20110087957**

(71) Applicant: **Samsung Corning Precision Materials
　　Co., Ltd.
　　Gyeongsangbuk-do
　　Gumi-si, 730-735 (KR)**

(72) Inventors:
　　• **Lee, Hoikwan
　　　336-841 Asan-si ChungCheongNam-Do (KR)**

　　• **Yoon, Kyungmin
　　　336-841 Asan-si ChungCheongNam-Do (KR)**
　　• **Cho, Seo-Yeong
　　　336-841 Asan-si ChungCheongNam-Do (KR)**
　　• **Kwon, YoonYoung
　　　336-841 Asan-si ChungCheongNam-Do (KR)**
　　• **Nam, Jinsu
　　　336-841 Asan-si ChungCheongNam-Do (KR)**
　　• **Park, Kyungwook
　　　336-841 Asan-si ChungCheongNam-Do (KR)**
　　• **Choi, Jeayoung
　　　336-841 Asan-si ChungCheongNam-Do (KR)**

(74) Representative: **Gulde Hengelhaupt Ziebig &
　　Schneider
　　Patentanwälte - Rechtsanwälte
　　Wallstrasse 58/59
　　10179 Berlin (DE)**

(54)　**Glass Tempering Method and Apparatus**

(57)　　A method of tempering glass and an apparatus for tempering glass, in which a heater is used and high frequency is generated. The method includes a heating step of heating a piece of glass using a heater and a high frequency generator and a cooling step of cooling the piece of glass by quenching.

FIG. 1

```
┌────────────────────────────────────────┐
│   LOAD GLASS INTO HEATING FURNACE       │───── S110
└────────────────────────────────────────┘
                    │
                    ▼
┌────────────────────────────────────────┐
│   HEAT GLASS USING HEATER AND HIGH      │───── S120
│        FREQUENCY GENERATOR              │
└────────────────────────────────────────┘
                    │
                    ▼
┌────────────────────────────────────────┐
│              COOL GLASS                 │───── S130
└────────────────────────────────────────┘
```

EP 2 565 168 A1

## Description

## CROSS REFERENCE TO RELATED APPLICATION

The present application claims priority from Korean Patent Application Number 10-2011-0087957 filed on August 31, 2011, the entire contents of which application are incorporated herein for all purposes by this reference.

## BACKGROUND OF THE INVENTION

## Field of the Invention

The present invention relates to a method of tempering glass and an apparatus for tempering glass, and more particularly, to a method of tempering glass and an apparatus for tempering glass, in which a heater is used and high frequency is generated.

## Description of Related Art

The use of glass materials is rapidly increasing in a variety of industrial fields, including photovoltaic cell covers; flat displays such as thin film transistor-liquid crystal displays (TFT-LCDs), organic electroluminescent (EL) displays; covers for a variety of mobile electronics; or the like.

Such glass materials are required to have a light weight and a thin profile, and it is therefore necessary to ensure longevity owing to the characteristics of glass materials having great brittleness.

Studies on a variety of tempering methods are underway in order to ensure the longevity of glass.

Glass tempering technologies of the related art include chemical tempering in which ions are exchanged between the surface of a piece of glass and a water solution (molten salt) and thermal tempering in which a piece of glass is heat-treated.

However, chemical tempering has drawbacks in that its value of use is unsatisfactory in terms of the process time required for ion exchange between the piece of glass and the water solution, the size of the piece of glass, the recycling of the water solution (pollution and concentration control), and the like.

In addition, thermal tempering of the related art involves quenching after raising temperature while moving a glass plate in a hot horizontal furnace. However, since the glass stays inside a hot tempering furnace for a limited time and the temperature of the piece of glass starts to rise with the surface thereof, the ability to homogenize the temperatures of the inner and outer parts of the piece of glass is limited. In addition, the minimum thickness of the piece of glass that can be tempered is 3.2mm, which is problematic.

Accordingly, in order to overcome the foregoing problems, an air convection system and a new quenching technology (water mist, control over the flow rate of compressed air, and the like) for promoting uniform heating are introduced. In addition, an improvement in a transferring method (air floating) prevents glass from deforming (roller waves, warping, and the like) even if the glass is overheated. Therefore, a quenching start temperature higher than those of the existing technologies is obtained.

However, even with such methods, the minimum thickness of a piece of glass that can be tempered is 2.8mm. This consequently limits the ability to reduce the weight and thickness of tempered glass, which is problematic.

Furthermore, regardless of the foregoing improvements in tempering technologies, according to such tempering technologies of the related art using convection and radiative, a piece of glass starts to be heated with the surface thereof. Therefore, the difference between the inner and outer parts of the piece of glass that can be obtained in quenching is limited. In particular, the temperature of the outer part is higher than the temperature of the inner part, which is disadvantageous in realizing surface compressive stress for tempering of the piece of glass.

The information disclosed in this Background of the Invention section is only for the enhancement of understanding of the background of the invention, and should not be taken as an acknowledgment or any form of suggestion that this information forms a prior art that would already be known to a person skilled in the art.

## BRIEF SUMMARY OF THE INVENTION

Various aspects of the present invention provide a piece of glass that has a great amount of forming stress after having been tempered by controlling the temperatures of inner and outer parts of the glass.

In an aspect of the present invention, provided is a method of tempering glass. The method includes a heating step of heating a piece of glass using a heater and a high frequency generator and a cooling step of cooling the piece of glass by quenching.

In an exemplary embodiment, the heating step may include a first heating step of heating the piece of glass using the first heater and a second heating step of heating the piece of glass that is heated by the first heater using the second heater and the high frequency generator.

In an exemplary embodiment, the first heating step may heat the piece of glass at a surface temperature ranging from 300°C to 800°C, and the second heating step may heat the piece of glass at a surface temperature ranging from 350°C to 850°C.

In an exemplary embodiment, in the piece of glass which has been heated in the heating step, the temperature of the inner part of the piece of glass may be higher than or equal to the temperature of the outer part of the piece of glass. Preferably, the outer part of the piece of glass is located at the outer surface of the piece of glass and the inner part of the piece of glass is located in the mass center of the piece of glass. The outer part of the piece of glass is preferably located in one of the centers of the main (upper and lower) surfaces of the shape piece of glass.

The piece of glass can be heated with a temperature of the inner part being higher than or equal to the temperature of the outer part by heating the piece of glass by irradiating the piece of glass with high frequency radiation (preferably ranging from 0.98GHz to 6.0GHz) having such an intensity that the inner temperature of the piece of glass becomes higher than the ambient temperature. This allows forming a temperature gradient in which the temperature of the surface (=outer part) of the piece of glass is lower than the temperature of the inner part of the piece of glass because the surface of the piece of glass is cooled by an ambient medium (e.g. air) having a lower temperature.

There are many parameters which influence the characteristics of heating the medium (piece of glass) such as for example the glass composition, the size of the medium, the composition of the ambient medium, the size of the process chamber and the like. According to the present invention it is possible to control output and operation of the high frequency such as to obtain a high temperature difference between inner and outer part. Preferably, the method comprises repeatedly detecting the temperature of the inner part of the piece of glass and repeatedly detecting temperature of the outer part of the piece of glass. The output and operation of the high frequency is preferably controlled based on the detected temperatures.

Alternatively the output and operation of the high frequency is preferably controlled based on pre-calculated or pre-measured data which are stored in a look-up table and which may contain a matrix with relevant data such as e.g. the glass composition, the size of the medium, the composition of the ambient medium, the size of the process chamber and the like. The look-up table contains the output and operation of the high frequency which is needed for the specific environment in order to obtain a high temperature difference between inner and outer part of the piece of glass.

In an exemplary embodiment, the thickness of the piece of glass may 2.8mm or less.

In an exemplary embodiment, the high frequency generator may generate high frequency ranging from 0.98GHz to 6.0GHz. It is preferred that the high frequency generator generate high frequency ranging from 2.4GHz to 5.8GHz.

In an exemplary embodiment, the cooling step may include quenching the piece of glass using air, water mist and a cool roller.

In another aspect of the present invention, provided is an apparatus for tempering glass. The apparatus includes a transfer unit for transferring a piece of glass; a heating unit for heating the piece of glass, the heating unit comprising a heater and a high frequency generator; and a cooling unit for quenching the piece of glass heated by the heating unit.

In an exemplary embodiment, the heating unit may include a preheating furnace for heating the piece of glass using a first heater and a main heating furnace for heating the piece of glass using a second heater and the high frequency generator.

In an exemplary embodiment, the transfer unit may include an air supplier for providing an air cushion to an undersurface of the piece of glass while transferring the piece of glass in the heating unit.

According to embodiments of the present invention, it is possible to ensure that the difference between the temperature of the inner part and the temperature of the outer part of the piece of glass be positive during the process in which the piece of glass is heated so that the piece of glass after having been tempered can achieve a great amount of forming stress, thereby further enhancing the strength of the piece of glass.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

**BRIEF DESCRIPTION OF THE DRAWINGS**

FIG. 1 is a schematic flowchart depicting a method of tempering glass according to an embodiment of the invention;

FIG. 2 is a graph depicting differences in the temperatures between inner and outer parts of a piece of glass that was heated using a heater of the related art;

FIG. 3 is a graph depicting variation in the temperatures of inner and outer parts of a piece of glass when the temperature of the outer part of the piece of glass has reached a predetermined temperature;

FIG. 4 is a graph depicting variation in the temperatures of inner and outer parts of a piece of glass depending on high frequency output after the piece of glass was heated so that the temperatures of the inner and outer parts thereof became 600°C;

FIG. 5 is a graph depicting the temperatures of inner and outer parts of a piece of glass that were controlled by adjusting high frequency output and operation;

FIG. 6 is a graph depicting differences in the temperatures between inner and outer parts of a piece of glass depending on initial temperatures after high-frequency heating;

FIG. 7 is a graph depicting variation in the temperature of an inner part of a piece of glass depending on the thickness of the piece of glass;

FIG. 8 is a schematic configuration view depicting an apparatus for tempering glass according to an embodiment of the invention; and

FIG. 9 is a schematic configuration view depicting a heater that is a component of the apparatus for tempering glass according to another embodiment of the invention.

## DETAILED DESCRIPTION OF THE INVENTION

Reference will now be made in detail to a method of tempering glass and an apparatus for tempering glass according to the present invention, various embodiments of which are illustrated in the accompanying drawings and described below, so that a person having ordinary skill in the art to which the present invention relates can easily put the present invention into practice.

Throughout this document, reference should be made to the drawings, in which the same reference numerals and signs are used throughout the different drawings to designate the same or similar components. In the following description of the present invention, detailed descriptions of known functions and components incorporated herein will be omitted when they may make the subject matter of the present invention unclear.

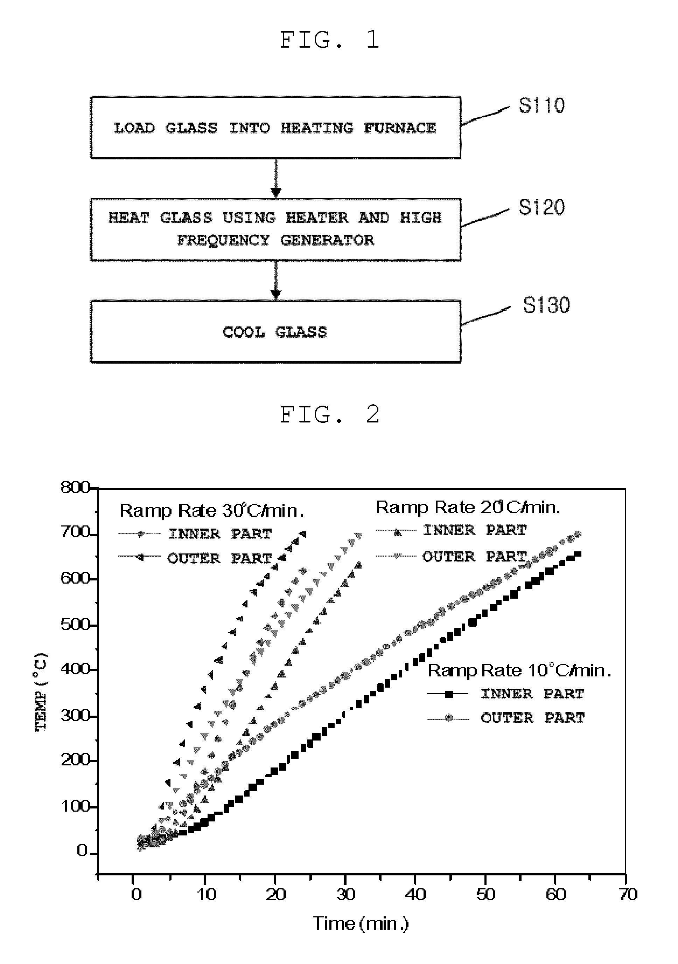

FIG. 1 is a schematic flowchart depicting a method of tempering glass according to an embodiment of the invention.

Referring to FIG. 1, the method of tempering glass according to an embodiment of the invention may include a transferring step S110, a heating step S120 and a cooling step S130.

In order to temper a piece of glass, first, at S110, the piece of glass that is to be tempered is transferred to a heating unit.

The piece of glass may be a thin plate of glass having a thickness of 2.8mm or less.

Afterwards, at S120, the piece of glass that is loaded into the heating unit is heated using a heater and a high frequency generator.

The heater heats the piece of glass from the outer part to the inner part thereof by generating heat due to electrical resistance, and the high frequency generator heats both the inner and outer parts of the piece of glass by vibrating ions inside the piece of glass by generating high frequency.

Here, the high frequency generator generates high frequency in the range from 0.98GHz to 6.0GHz, preferably, from 2.4GHz to 5.8GHz.

The difference between the inner and outer parts of the piece of glass that is being heated can be controlled by adjusting an atmospheric temperature during heating, high frequency output, the volume of the piece of glass, and the like. It is preferred that the piece of glass be heated until the temperature of the inner part of the piece of glass is the same as or greater than the temperature of the outer part of the piece of glass.

In general, a piece of tempered glass refers to a piece of glass of which the mechanical strength is increased by inducing stress to the piece of glass. Forming stress in the piece of glass after having been tempered is expressed by the following formula:

$$\sigma = \frac{\alpha E}{1-\nu} \times \frac{2}{3} \times \Delta T \quad ,$$

where $\sigma$ is the stress of the piece of glass after having been tempered, $\nu$ is Poisson's ratio, $\alpha$ is a coefficient of thermal expansion, E is Young's modulus, and $\Delta T$ ($\Delta T_{heating} + \Delta T_{quenching}$) is the temperature of an inner part of the piece of glass - the temperature of an outer part of the piece of glass.

Heating using a heater ($\Delta T_{heating}$) is a type of heating using radiation/convection/conduction, in which the difference between the temperatures of the inner and outer parts of the piece of glass has a negative value. The heater may radiate infrared rays. In contrast, quenching ($\Delta T_{quenching}$) has a problem in that the difference between the temperatures of the inner and outer parts of the piece of glass has a positive value so that stress that can be obtained after tempering decreases.

Accordingly, the present invention heats the piece of glass using the heater and the high frequency generator.

Heating using the heater starts with the outer part (surface) of the piece of glass, and heating using the high frequency generator is carried out across the inner and outer parts (volume) of the piece of glass.

The piece of glass is heated using the heater and the high frequency generator, whereas the temperature atmosphere of the heating unit depends only on the heating temperature of the heater, so that the temperature of the heating unit becomes lower than the temperature of the piece of glass. This consequently forms a temperature gradient in which the temperature of the surface of the piece of glass is lower than the temperature of the inner part of the piece of glass because the surface of the piece of glass is cooled by the air.

Since the difference between the temperatures of the inner and outer parts of the piece of glass $\Delta T_{heating}$ has a positive value, the piece of glass after having been tempered can obtain great forming stress. Therefore, it is possible to further enhance the strength of the piece of glass.

The heating step for the piece of glass that is loaded into the heating unit can include a first heating step in which a first heater is used and a second heating step in which a second heater and a high frequency generator are used.

Since the piece of glass is heated using the first heater and is then heated using the second heater and the high frequency generator, it is possible to increase the temperature of the inner part of the piece of glass due to high frequency heating while reducing the problems of difficult temperature control and localized heating which would otherwise occur when the piece of glass is heated by the high frequency.

Specifically, the high frequency heating may cause a phenomenon of thermal runway that is attributable to a nonlinear increase in the temperature of the piece of glass and a phenomenon of localized heating at a point on the piece of glass in which high frequency is highly absorbed.

However, since the high frequency heating is performed after the piece of glass is heated due to the frictional heating using the heater such that its temperature becomes a predetermined temperature or higher at which the thermal runway would otherwise occur due to the high frequency heating, it is possible to prevent the thermal runway of the piece of glass and alleviate the localized heating of the piece of glass.

Here, at the first heating step, the piece of glass will be heated at a temperature that is 300°C or higher and does not exceed a temperature at which the piece of glass is heated at the second heating step.

Even when the heating temperature at the first heating step and the heating temperature at the second heating step are the same, the temperature of the inner part of the piece of glass at the second heating step is higher than the temperature of the inner part of the piece of glass at the first heating step because the second heating step includes high frequency heating.

It is preferred that the first heating step heat the piece of glass at a temperature ranging from 300°C to 800°C and that the second heating step heat the piece of glass at a temperature ranging from 350°C to 850°C.

Finally, at S130, the piece of heated glass is cooled by quenching, so that tempering of the piece of glass is completed.

Here, quenching may be carried out by blowing cooled compressed air and/or water mist onto the heated piece of glass. Furthermore the heated piece of glass is preferably transferred on a cool roller.

FIG. 2 to FIG. 7 are graphs depicting effects on a piece of glass caused by high frequency heating according to the invention.

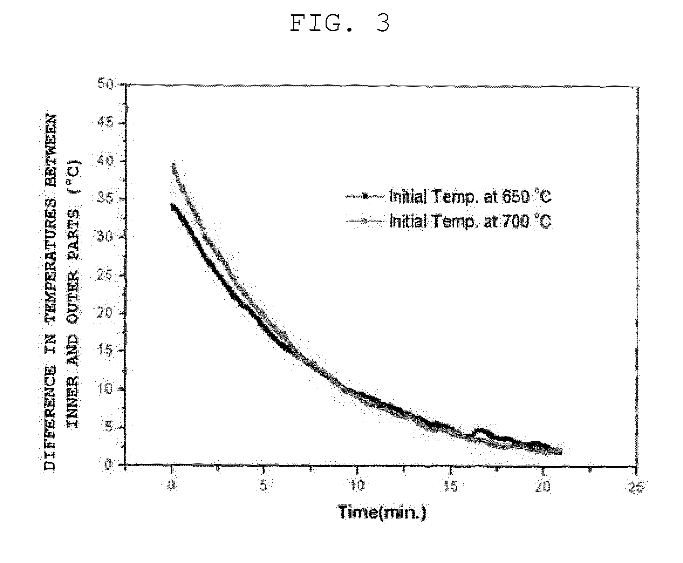

FIG. 2 is a graph depicting differences in the temperatures between inner and outer parts of a piece of glass that was heated using a heater of the related art, and FIG. 3 is a graph depicting variation in the temperatures of inner and outer parts of a piece of glass when the temperature of the outer part of the piece of glass has reached a predetermined temperature.

Referring to FIG. 2, it can be appreciated that the temperature of the outer part of the piece of glass is higher than the temperature of the inner part of the piece of glass when the piece of glass was heated using the heater of the related art. It is therefore apparent, as described above, that the use of the heater of the related art has a disadvantageous effect on the formation of stress which strengthens the piece of glass.

In addition, referring to FIG. 3, it takes a long time before the temperature of the outer part of the piece of glass becomes the same as the temperature of inner part of the piece of glass. It is difficult to adjust/maintain the temperatures of the inner and outer parts of the piece of glass to be uniform within a predetermined process time using the method of the related art. That is, the method of imparting the piece of glass with high forming strength by homogenizing the temperatures of the inner and outer parts of the piece of glass after the piece of glass is heated using the heater of the related art is rarely applicable to an in-line process.

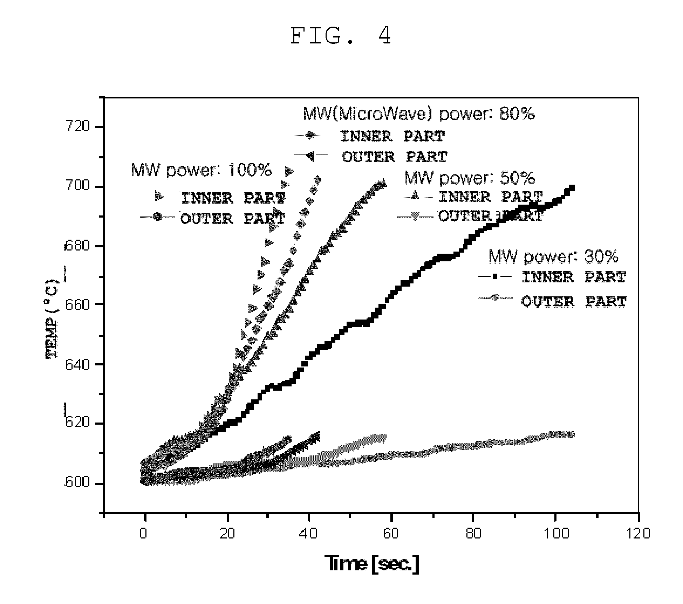

FIG. 4 is a graph depicting variation in the temperatures of inner and outer parts of a piece of glass depending on high frequency output after the temperatures of the inner and outer parts of the piece of glass are heated to 600°C.

Referring to FIG. 4, it can be appreciated that the inner part of the piece of glass was heated first when the piece of glass was heated using high frequency. Accordingly, the piece of glass after having been tempered can have large compressive stress, as described above.

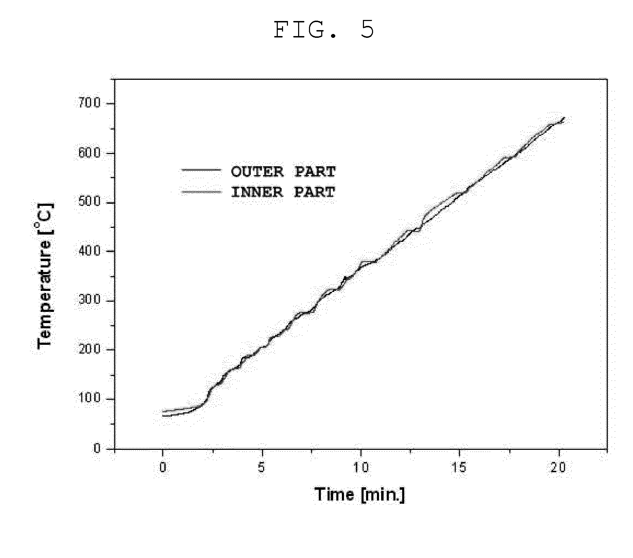

FIG. 5 is a graph depicting the temperatures of inner and outer parts of a piece of glass that are controlled by adjusting the output and operation of high frequency. That is, the invention makes it possible to efficiently control the stress of the piece of glass after having been tempered by adjusting the temperatures of the inner and outer parts of the piece of glass due to control over high frequency output.

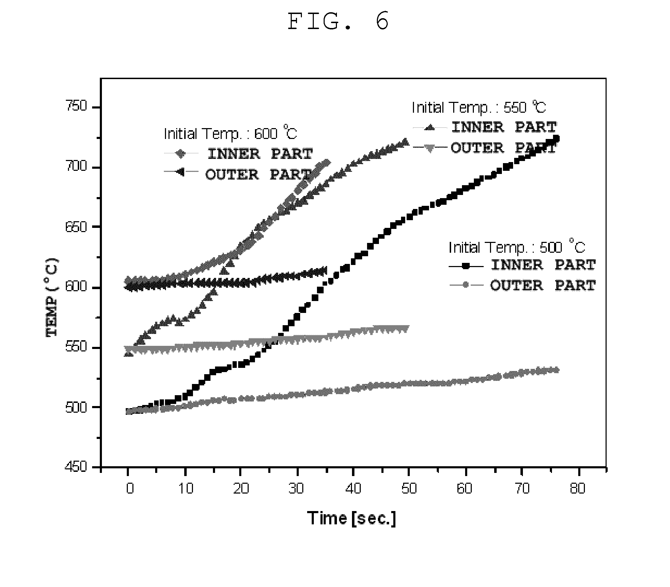

FIG. 6 is a graph depicting differences in the temperatures between inner and outer parts of a piece of glass depending on initial temperatures after high-frequency heating.

Referring to FIG. 6, the temperatures of the inner and outer parts of the piece of glass depending on the initial temperatures did not vary greatly. It is therefore apparent that it is easy to control the temperature of the piece of glass at a predetermined temperature or higher.

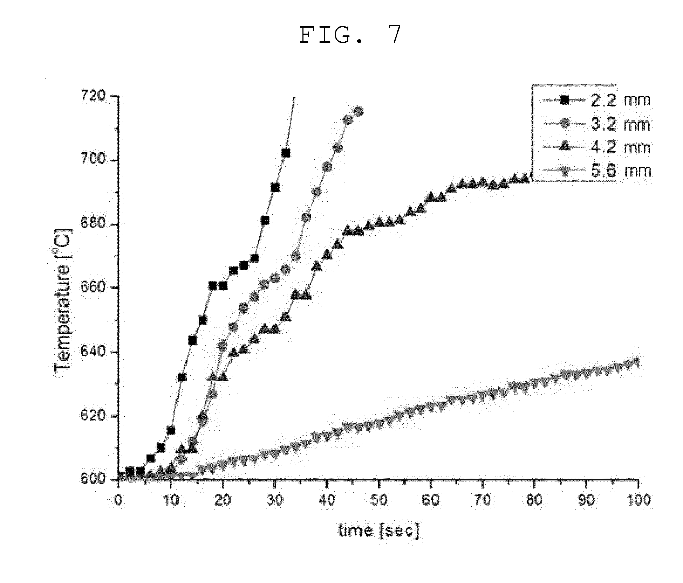

FIG. 7 is a graph depicting variation in the temperature of an inner part of a piece of glass depending on the thickness of the piece of glass..

Referring to FIG. 7, it can be appreciated that the rate at which the temperature of the inner part of the piece of glass rises is increased with the decrease in the thickness of the piece of glass. That is, it shows that it is possible to not only heat even a thin plate of glass using high frequency, but also achieve high productivity by reducing process time for tempering.

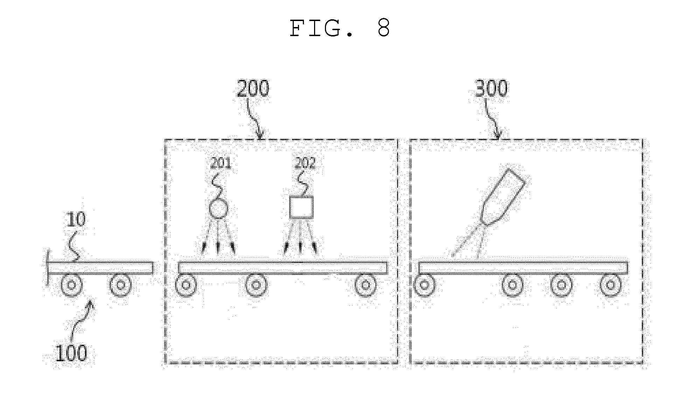

FIG. 8 is a schematic configuration view depicting an apparatus for tempering glass according to another embodiment of the invention.

Referring to FIG. 8, the apparatus for tempering glass includes a transferring section 100, a heating section 200 and a cooling section 300.

The transferring section 100 transfers a piece of glass 10 that is to be tempered. Although FIG. 8 illustrates that the transferring unit includes a roller, the present invention is not limited thereto. Rather, the transferring section may be realized such that the surface of the glass is transferred without contacts.

In addition, the transferring unit 100 may include an air supplier (not shown) which serves to prevent the piece of glass 10 from being damaged when the piece of glass 10 is transferred in the heating unit 200.

When the piece of glass 10 is transferred using a roller in a hot atmosphere of the heating unit 200, some problems may occur in the process in which the surface of the piece of glass is brought contact with the surface of the roller. The problems of the piece of glass may include, but are not limited to, warping, sagging and surface damage, in which scratches or waved recesses (namely, roller waves) are formed in the surface of the piece of glass.

Accordingly, the piece of glass is brought into contact with the roller via the air supplier (not shown) and an air cushion is formed by blowing air onto the undersurface of the piece of glass that would otherwise warp or sag due to heat. In this fashion, it is possible to support the piece of glass that would otherwise warp or sag and to prevent the surface of the piece of glass from being damaged. Here, the air that is blown onto the piece of glass may be hot air.

The heating unit 200 includes a heater 201 for heating the piece of glass and a high frequency generator 202. Although FIG. 8 shows one heater and one high frequency generator, a plurality of heaters and a plurality of high frequency generators corresponding to the size of the piece of glass may be provided. In this case, it is preferred that the heaters and the high frequency generators be disposed such that they alternate with each other.

As described above, the heater 201 heats the piece of glass 10 from the outer part to the inner part thereof by generating heat due to electrical resistance, and the high frequency generator 202 heats both the inner and outer parts of the piece of glass 10 due to frictional heat by vibrating ions inside the piece of glass 10 by generating high frequency.

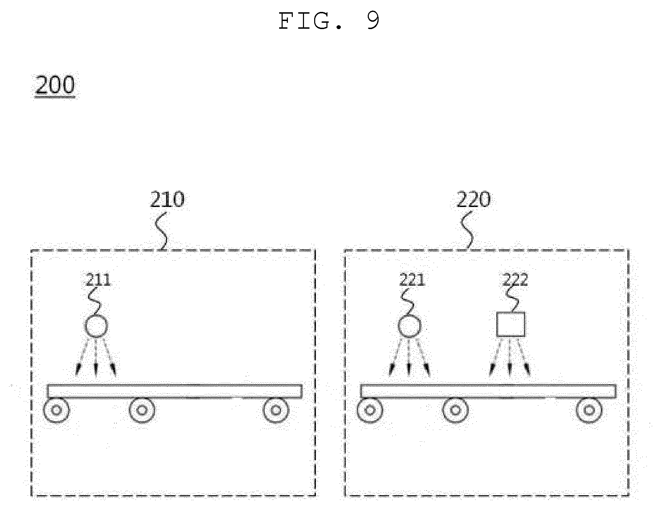

FIG. 9 is a schematic configuration view depicting a heater that is a component of the apparatus for tempering glass according to another embodiment of the invention.

As shown in FIG. 9, the heating unit 200 may include a preheating furnace 210 which heats the piece of glass 10 using the first heater 211 and a main heating furnace 220 which heats the piece of glass using the second heater 221 and the high frequency generator 222.

In some embodiments, the first heater and the second heater may be the same heater. For example, in an apparatus for tempering glass in which the piece of glass 10 is heated while temporarily staying in the heating unit or the heater moves along the piece of glass, the piece of glass may be preheated and heated using the same heater.

The cooling unit 300 quenches the piece of glass 10 that has been heated by the heating unit 200.

Although FIG. 9 shows one first heater, one second heater and one high frequency generator, a plurality of first heaters, a plurality of second heaters and a plurality of high frequency generators corresponding to the size of the piece of glass may be provided.

The foregoing descriptions of specific exemplary embodiments of the present invention have been presented with respect to the certain embodiments and drawings. They are not intended to be exhaustive or to limit the invention to the precise forms disclosed, and obviously many modifications and variations are possible for a person having ordinary skill in the art in light of the above teachings.

It is intended therefore that the scope of the invention not be limited to the foregoing embodiments, but be defined by the Claims appended hereto and their equivalents.

**Claims**

1. A method of tempering glass, comprising the steps of:

   heating (S120) a piece of glass (10) using a heater (201, 211, 221) and a high frequency generator (202, 222); and
   cooling (S130) the piece of glass (10) by quenching.

2. The method of claim 1, wherein
   the heater (201) comprises a first heater (211) and a second heater (221), and
   the heating step comprises:

   - heating the piece of glass (10) using the first heater (211); and
   - heating the piece of glass (10) that was heated by the first heater (211) using the second heater (221) and the high frequency generator (222).

3. The method of claim 2, wherein the high frequency generator (202, 222) generates high frequency ranging from 0.98GHz to 6.0GHz.

4. The method of claim 3, wherein the high frequency generator (202, 222) generates high frequency ranging from 2.4GHz to 5.8GHz.

5. The method according to any of claims 2 to 4, wherein heating the piece of glass (10) using the first heater (211) comprises heating the piece of glass (10) at a temperature ranging from 300°C to 800°C, and heating the piece of glass (10) using the second heater (221) and the high frequency generator (222) comprises heating the piece of glass (10) at a temperature ranging from 350°C to 850°C.

6. The method according to any one of the preceding claims, wherein the step of heating (S120) the piece of glass (10) is performed such that a temperature of an inner part of the piece of glass (10) is higher than or equal to a temperature of an outer part of the piece of glass (10).

7. The method according to any one of the preceding claims, wherein a thickness of the piece of glass (10) is 2.8mm or less.

8. The method according to any one of the preceding claims, wherein the cooling step (S130) comprises quenching the piece of glass (10) using air, water mist and a cool roller.

9. An apparatus for tempering glass, comprising:

   a transfer unit (100) adapted for transferring a piece of glass (10);
   a heating unit (200) adapted for heating the piece of glass (10), the heating unit (200) comprising a heater (201, 211, 221) and a high frequency generator (202, 222); and
   a cooling unit (300) adapted for quenching the piece of glass (100) after being heated by the heating unit (200).

10. The apparatus of claim 9, wherein
   the heater (201) comprises a first heater (211) and a second heater (221), and
   the heating unit (200) is adapted to heat the piece of glass (10) using the first heater (211), and then to heat the piece of glass (10) using the second heater (221) and the high frequency generator (222).

11. The apparatus according to any of claim 9 and 10, wherein the transfer unit (100) comprises an air supplier adapted for providing an air cushion to an undersurface of the piece of glass (10) while transferring the piece of glass (10) in the heating unit (200).

FIG. 1

```
┌────────────────────────────────────┐
│ LOAD GLASS INTO HEATING FURNACE     │── S110
└────────────────────────────────────┘
              │
              ▼
┌────────────────────────────────────┐
│ HEAT GLASS USING HEATER AND HIGH    │── S120
│       FREQUENCY GENERATOR           │
└────────────────────────────────────┘
              │
              ▼
┌────────────────────────────────────┐
│           COOL GLASS                │── S130
└────────────────────────────────────┘
```

FIG. 2

FIG. 3

FIG. 4

FIG. 5

FIG. 6

FIG. 7

FIG. 8

FIG. 9

200

210

211

220

221    222

Europäisches
Patentamt

European
Patent Office

Office européen
des brevets

**EUROPEAN SEARCH REPORT**

Application Number

EP 12 18 2431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 827 345 A (BOAZ PREMAKARAN TUCKER [US] ET AL) 27 October 1998 (1998-10-27) <br> * column 2, lines 65-67; claims 1, 2, 5 * <br> * column 3, lines 43-44, 54; figure 1 * | 1-11 | INV. <br> C03B27/004 <br> C03B27/02 <br> C03B27/044 <br> C03B29/08 |
| X | US 2003/233846 A1 (BOAZ PREMAKARAN T [US]) 25 December 2003 (2003-12-25) <br> * paragraph [0036]; claims 1, 2, 9, 10; figure 2 * | 1-11 | C03B35/18 <br> C03B35/24 <br> C03C23/00 <br> H05B6/80 |
| X | US 3 406 022 A (CHARLES GEHENOT) 15 October 1968 (1968-10-15) <br> * column 3, lines 6-30; claim 1 * | 1-11 | |
| A | US 5 782 947 A (BOAZ PREMAKARAN TUCKER [US]) 21 July 1998 (1998-07-21) <br> * column 1, line 38; claim 1; figure 1 * <br> * column 2, lines 44-45 * | 1-11 | |
| X,P | EP 2 471 759 A1 (SAMSUNG CORNING PREC MAT CO [KR]) 4 July 2012 (2012-07-04) <br> * claims 1, 2, 5-7, 10; figure 1 * | 1,9,11 | TECHNICAL FIELDS SEARCHED (IPC) |
| X,P | DATABASE WPI <br> Week 201168 <br> Thomson Scientific, London, GB; <br> AN 2011-M60839 <br> XP002686929, <br> -& WO 2011/122679 A1 (ASAHI GLASS CO LTD) 6 October 2011 (2011-10-06) <br> * abstract; figure 1 * <br> * paragraphs [0040], [0041] * | 1,9 | C03B <br> C03C <br> H05B |

The present search report has been drawn up for all claims

| Place of search | Date of completion of the search | Examiner |
|---|---|---|
| The Hague | 20 November 2012 | Flügel, Alexander |

EPO FORM 1503 03.82 (P04C01)

## ANNEX TO THE EUROPEAN SEARCH REPORT
## ON EUROPEAN PATENT APPLICATION NO.

EP 12 18 2431

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2012

| Patent document cited in search report | | Publication date | Patent family member(s) | | Publication date |
|---|---|---|---|---|---|
| US 5827345 | A | 27-10-1998 | DE | 69608747 D1 | 13-07-2000 |
| | | | DE | 69608747 T2 | 12-10-2000 |
| | | | EP | 0761614 A1 | 12-03-1997 |
| | | | US | 5827345 A | 27-10-1998 |
| US 2003233846 | A1 | 25-12-2003 | AT | 402909 T | 15-08-2008 |
| | | | AU | 2003270839 A1 | 08-04-2004 |
| | | | BR | 0314851 A | 09-08-2005 |
| | | | CA | 2499488 A1 | 01-04-2004 |
| | | | CA | 2744968 A1 | 01-04-2004 |
| | | | CN | 1701043 A | 23-11-2005 |
| | | | CR | 7800 A | 07-09-2007 |
| | | | EP | 1549591 A2 | 06-07-2005 |
| | | | ES | 2311722 T3 | 16-02-2009 |
| | | | JP | 4703188 B2 | 15-06-2011 |
| | | | JP | 2006500308 A | 05-01-2006 |
| | | | KR | 20050043980 A | 11-05-2005 |
| | | | MX | NL05000028 A | 23-08-2005 |
| | | | NZ | 539267 A | 31-05-2007 |
| | | | PL | 206430 B1 | 31-08-2010 |
| | | | PT | 1549591 E | 03-09-2008 |
| | | | RU | 2325334 C2 | 27-05-2008 |
| | | | US | 7367205 B1 | 06-05-2008 |
| | | | US | 2003233846 A1 | 25-12-2003 |
| | | | WO | 2004026775 A2 | 01-04-2004 |
| US 3406022 | A | 15-10-1968 | BE | 665210 A | 10-12-1965 |
| | | | DE | 1496444 A1 | 14-05-1969 |
| | | | FR | 1447287 A | 09-11-1966 |
| | | | GB | 1104449 A | 28-02-1968 |
| | | | LU | 46312 A1 | 01-01-1972 |
| | | | US | 3406022 A | 15-10-1968 |
| US 5782947 | A | 21-07-1998 | DE | 69608746 D1 | 13-07-2000 |
| | | | DE | 69608746 T2 | 12-10-2000 |
| | | | EP | 0761612 A1 | 12-03-1997 |
| | | | US | 5782947 A | 21-07-1998 |
| EP 2471759 | A1 | 04-07-2012 | CN | 102583990 A | 18-07-2012 |
| | | | EP | 2471759 A1 | 04-07-2012 |
| | | | JP | 2012140321 A | 26-07-2012 |
| | | | KR | 20120077333 A | 10-07-2012 |
| | | | US | 2012167626 A1 | 05-07-2012 |
| WO 2011122679 | A1 | 06-10-2011 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110087957